(19) Europäisches Patentamt / European Patent Office / Office européen des brevets

(11) **EP 0 969 682 B1**

(12) **FASCICULE DE BREVET EUROPEEN**

(45) Date de publication et mention
de la délivrance du brevet:
**25.11.2009 Bulletin 2009/48**

(51) Int Cl.:
*H04W 24/08* <sup>(2009.01)</sup>    *H04B 7/26* <sup>(2006.01)</sup>
*H04L 1/12* <sup>(2006.01)</sup>

(21) Numéro de dépôt: **99116653.9**

(22) Date de dépôt: **07.04.1995**

(54) **Procédé d'adaptation de l'interface air dans un système de radiocommunication avec des mobiles et station de base, station mobile et mode transmission correspondants**

Verfahren zur Luftschnittstellenanpassung in einem mobilen Funkübertragungssystem und entsprechende Basisstation, Mobilstation, und Übertragungsmodus

Air interface adaptation method in a mobile radio communication system, base station, mobile station and transmission mode therefor

(84) Etats contractants désignés:
**AT BE CH DE DK ES FR GB IT LI NL SE**

(30) Priorité: **13.04.1994 FR 9404396**

(43) Date de publication de la demande:
**05.01.2000 Bulletin 2000/01**

(62) Numéro(s) de document de la (des) demande(s)
initiale(s) en application de l'article 76 CBE:
**95916725.5 / 0 755 615**

(73) Titulaire: **Alcatel Lucent
75008 Paris (FR)**

(72) Inventeurs:
• **Delprat, Marc
78150 Le Chesnay (FR)**
• **Le Strat, Evelyne
75015 Paris (FR)**

(74) Mandataire: **El Manouni, Josiane et al
Alcatel Lucent
Intellectual Property & Standards
54 rue La Boétie
75008 Paris (FR)**

(56) Documents cités:
**EP-A- 0 333 679    EP-A- 0 423 485
EP-A- 0 472 511    EP-A- 0 627 827
WO-A-92/22162**

• **MOULY ET AL.: "The GSM System for Mobile Communications" , EUROPE MEDIA , LASSAY-LES-CHATEAUX, FR XP002119307 * page 161, ligne 1 - ligne 13 * * page 189, alinéa 4.1.1 * * page 227, alinéa 4.3 ***
• **MILLMAN J.; TAUB H.: 'Pulse, Digital and Switching Waveforms, Devices and circuits for their generation and processing', 1965, MCGRAW-HILL ELECTRICAL AND ELECTRONIC ENGINEERING SERIES, UNITED STATES OF AMERICA**

EP 0 969 682 B1

## Description

Le domaine de l'invention est celui des radiocommunications numériques vers des mobiles. L'invention s'applique notamment aux systèmes de radiocommunication cellulaires, tels que, par exemple, les systèmes répondant au standard GSM (Groupe Spécial Mobile).

Plus particulièrement, l'invention concerne les échanges de signaux numériques, qu'il s'agisse de données ou de parole, dans les systèmes mettant en oeuvre un multiplexage temporel, selon la technique dite AMRT (Accès Multiple par Répartition dans le Temps).

De façon connue, la technique AMRT consiste à diviser le temps en trames de durée fixe et prédéterminée, elles-mêmes divisées en intervalles de temps. A chaque communication à assurer on associe un (ou plusieurs) intervalles de temps.

Ainsi, une trame comprend N intervalles de temps, pouvant correspondre à N communications. Chaque récepteur sait extraire les intervalles de temps qui lui sont destinés, de façon à reconstruire le signal source. De cette façon, N communications peuvent être transmises sur une même bande de fréquence.

Classiquement, en ce qui concerne les échanges de données, les systèmes de radiocommunication tels que le GSM prévoient deux services, correspondant à deux niveaux de qualité distincts. Ainsi, le système GSM prévoit, pour la transmission de données, un premier mode de transmission de données, appelé mode plein débit (et dit mode "full rate" en anglo-saxon) consistant à transmettre un intervalle de temps dans chaque trame, et un second mode de transmission, dit mode demi-débit, ou mode "half rate" en anglo-saxon, dans lequel le signal de données est transmis dans un intervalle de temps une trame sur deux seulement, en moyenne.

Selon ce second mode, la ressource allouée à une communication est divisée par deux, par rapport au premier mode. Cela libère donc des ressources pour d'autres communications.

Bien sûr, cette réduction de moitié du débit total de la communication nécessite une modification du codage canal mis en oeuvre, pour conserver un même débit utile. En d'autres termes, le mode "half rate" correspond à un codage canal de rendement moitié de celui du mode "full rate". Dans le cas du GSM, ces deux modes correspondent respectivement à des débits bruts de 11, 4 et 22, 8 kbits/s.

En conséquence, l'efficacité du codage canal en "half rate" est inférieure à celle du codage canal en "full rate". Le mode "half rate" ne peut donc être mis en oeuvre que lorsque les conditions de transmission sont bonnes et/ou la qualité de service requise est moyenne, c'est-à-dire que celui-ci admet un taux d'erreur binaire relativement élevé. Dès que le canal de transmission est perturbé et/ou que les données requièrent une bonne qualité (c'est-à-dire un taux d'erreur faible), il est nécessaire d'utiliser le mode "full rate".

Selon la norme GSM, le choix d'un mode de transmission se fait à l'établissement de la communication, et est définitif pour toute la communication. L'inconvénient de cette technique est double :

- si le service considéré requiert une qualité correspondant à l'utilisation du mode "half rate" dans des conditions normales d'opérabilité et si le mode retenu est le mode "half rate", et que le canal devient plus perturbé, c'est-à-dire que l'on dépasse le point d'opérabilité du système (fixé à C/I de l'ordre de 9dB), la communication en cours est brutalement interrompue. Or, dans des conditions difficiles de couverture, une valeur de C/I inférieure à 9 dB peut se rencontrer ;
- si le service considéré requiert une qualité correspondant à l'utilisation du mode "full rate" dans des conditions normales d'opérabilité et si le mode retenu est le mode "full rate" et que le canal devient moins perturbé, le codage canal mis en oeuvre est d'une qualité supérieure à la qualité requise. Le canal de transmission est alors inutilement encombré une trame sur deux (d'où des interférences non nécessaires dans les cellules voisines).

Dans les systèmes de radiocommunication avec un mobile, ces problèmes sont des problèmes majeurs, du fait que le canal de transmission change en permanence en fonction des déplacements du mobile, des déplacements et de l'activité des brouilleurs,

etc... Cela conduit le plus souvent à choisir le mode "full rate", par sécurité, ce qui entraine une consommation élevée, et souvent inutile, de la ressource de transmission.

Dans le cas de la phonie, on peut également distinguer deux configurations (modes plein débit et demi débit respectivement), qui correspondent à l'utilisation de codeurs de parole (codage source) différents, d'une part, et de codeurs canal différents, d'autre part, les deux couples de codeurs (source et canal) permettant d'atteindre respectivement les débits bruts de 22,8 kbits/s ("full rate") et 11,4 kbits/s ("half rate").

Des problèmes similaires à ceux décrits ci-dessus pour les données sont donc également rencontrés pour la parole.

L'un des objectifs majeurs des concepteurs de ces systèmes de radiocommunication est de limiter la quantité de données transmises, pour de nombreuses raisons, et notamment pour :

- augmenter le nombre de communications dans le multiplex ;
- réduire les temps de transmission (dans le cas de la transmission de données) ;

Dans ce but notamment, la demande de brevet européenne EP 0 472 511 a proposé de modifier en cours de communication le mode de transmission mis en oeuvre, en fonction d'une mesure du taux d'erreur binaire.

Plus précisément, selon le procédé décrit dans cette demande, la station de base (station gérant l'ensemble des communications avec des mobiles dans une cellule donnée) mesure le taux d'erreur binaire d'une communication donnée, et sélectionne l'un ou l'autre des modes de transmission, en fonction du taux d'erreur mesuré.

Cette technique permet d'améliorer l'utilisation des ressources de transmission. Elle présente toutefois plusieurs inconvénients, que l'approche technique nouvelle de l'invention permet de bien mettre en évidence. Notamment, elle repose sur une analyse du canal de transmission vu de la station de base uniquement (ou de la station mobile uniquement), ce qui conduit à une utilisation non optimisée des ressources, ainsi que cela apparaîtra par la suite

Il est par ailleurs connu, du document EP-A-0 423 485, un procédé et un dispositif pour la transmission bidirectionnelle de données, notamment sans fil, dans lequel, en présence de caractéristiques différentes du canal aller et du canal retour, on peut choisir un codage canal différent.

Pour une description des systèmes de radiocommunications mobiles tels que notamment le système GSM, on pourra en outre se référer au livre de M Mouly et M B Pautet, "The GSM System for Mobile Communications", ISBN 2-9507190-07-7.

L'invention a notamment pour objectif de pallier ces différents inconvénients de l'état de la technique.

Plus précisément, un objectif de l'invention est de fournir un procédé d'adaptation de l'interface air (correspondant essentiellement aux couches 1 (physique) et 2 (liaison) du modèle ISO) dans un système de radiocommunication, permettant de réduire au maximum l'encombrement des canaux de transmission, en abaissant la quantité de ressource allouée en moyenne à une communication, d'une part, et d'autre part de limiter les interférences induites par une communication dans les cellules voisines.

Cet objectif de limitation des interférences est notamment crucial dans les systèmes de radiocommunication cellulaire. En effet, dans ces systèmes, une même bande de fréquence est allouée à plusieurs cellules géographiques. Bien que la répartition de ces dernières soit définie de façon à maximiser la distance entre ces cellules, il n'est pas rare que les signaux d'une cellule donnée soient perturbés par ceux d'autres cellules utilisant la même bande au-delà d'une limite acceptable pour le système.

Dans un système cellulaire, on fixe généralement un niveau maximum d'interférence permettant d'assurer la qualité du service. Un objectif de l'invention est donc de fournir un tel procédé, permettant de continuer à assurer la qualité d'un service, même lorsque l'interférence dépasse ce niveau maximum.

L'invention a ainsi pour objectif de fournir un tel procédé, dans lequel les cas de coupures intempestives de la communication sont réduits.

En d'autres termes, un objectif de l'invention est d'élargir la plage d'opérabilité du système, notamment vers des conditions de transmission difficiles.

Un autre objectif essentiel et primordial de l'invention est de fournir un tel procédé, qui permette d'augmenter le nombre de communications. En d'autres termes, l'invention a pour objectif de diminuer, en moyenne, la ressource utilisée pour la transmission d'un service, afin d'augmenter le nombre d'utilisateurs dans le système, c'est-à-dire le nombre de communications par cellules.

Selon un mode de réalisation particulier de l'invention, un objectif secondaire de l'invention est de fournir un tel procédé permettant de transmettre aisément et le plus rapidement possible des données asynchrones, en particulier lorsqu'on ne peut pas libérer une même ressource dans les deux sens de communication.

L'invention a aussi pour objectif de fournir un tel procédé, qui permette de simplifier la mise en oeuvre de l'infrastructure d'un réseau. En effet, classiquement, la planification du réseau doit être faite de façon à offrir partout (ou sur une certaine portion de la surface de chaque cellule) un point d'opérabilité acceptable (C/I ≈ 9 dB en GSM), ce qui, dans certains cas, entraîne des contraintes très lourdes.

L'invention a donc pour objectif de relâcher cette contrainte, en élargissant la plage d'opérabilité (au-delà de 9 dB, par exemple, dans le cas du GSM), de façon à permettre une planification plus efficace, en réduisant le nombre de sites.

Un autre objectif de l'invention est également de fournir un tel procédé, s'appliquant aussi bien aux signaux de parole qu'aux signaux de données.

Ces objectifs, ainsi que d'autres qui apparaîtront par la suite, sont atteints selon l'invention à l'aide d'un procédé, un système, un équipement de réseau et une station mobile, tels que définis dans les revendications.

L'invention repose en effet sur une approche nouvelle du canal de transmission, qui est considéré de façons distinctes selon chaque sens de transmission. Il apparaît en effet que les conditions de transmission peuvent être très différentes d'un sens de transmission à l'autre. Cela est notamment dû au fait que les brouilleurs sont différents. Dans le sens dit montant ("uplink" en anglo-saxon), c'est-à-dire de la station mobile vers la station de base, les brouilleurs sont essentiellement les mobiles se déplaçant dans les cellules co-canal, alors que dans le sens opposé, dit descendant (ou "downlink" en anglo-saxon), les brouilleurs sont les stations de base voisines. Les effets de masque sont donc différents.

L'invention permet donc une triple optimisation :

- sur l'analyse des conditions de transmission, qui n'étaient auparavant vues que d'une seule extrémité (en général la station de base). On pouvait alors estimer bon un canal mauvais dans l'autre sens, et inversement. L'invention suppose un retour d'une information de qualité (dans au moins un sens) pour prendre une décision ;

- sur la sélection du mode de codage, qui est faite sélectivement pour chaque sens de transmission ; et
- sur le mode de codage mis en oeuvre, puisque l'invention permet d'agir sélectivement sur le codage source et/ou sur le codage canal.

Il convient de noter que la démarche de l'invention n'est nullement évidente, au vu des techniques connues. En effet, outre le fait qu'elle repose sur une approche nouvelle du canal de transmission, plusieurs adaptations sont nécessaires pour mettre en oeuvre l'invention, notamment en ce qui concerne les échanges d'informations (de mesure de qualité et/ou de changement de mode de codage) entre les deux stations.

Certains systèmes de radiocommunication, tel que le GSM, allouent les ressources de façon figée, selon au moins deux modes de transmission, correspondant à des ressources de transmission allouées à une communication différentes.

Plus précisément, un mode de transmission définit un couple (mode de codage, ressource allouée). Le mode de transmission correspond donc à l'utilisation d'un certain mode de codage et l'allocation d'une certaine ressource. Un mode de codage peut donc correspondre à plusieurs modes de transmission.

Dans ce cas, lors d'une communication entre un mobile et une station de base, on sélectionne avantageusement, selon l'invention, un desdits modes de transmission unidirectionnel, pour chaque sens de transmission montant et descendant, en fonction d'au moins une desdites analyses de qualité de transmission et du niveau de qualité requis pour ladite communication, et éventuellement de la charge de trafic.

En d'autres termes, un mode de transmission est choisi à l'initialisation d'une communication, correspondant par exemple à un niveau de qualité requis. En cours de communication, l'invention permet un changement de mode de transmission, correspondant à un changement de mode de codage, dès que cela est possible (passage à un mode moins robuste vis-à-vis des erreurs de transmission, mais offrant une meilleure qualité et/ou une plus faible consommation de ressources), ou nécessaire (passage à un mode plus robuste vis-à-vis des erreurs de transmission, mais plus consommateur de ressources et/ou permettant de maintenir le service au détriment d'une légère baisse de la qualité, sous réserve bien sûr de disponibilité).

Plusieurs situations peuvent être envisagées, selon que le système de radiocommunication considéré exige ou non une symétrie dans l'allocation des ressources pour chaque sens de transmission.

Dans le second cas, qui peut être assimilé à une double communication unidirectionnelle, le principe peut être très simple : le changement de mode dans un sens a lieu dès que le changement de mode de codage vers un mode moins, respectivement plus, robuste vis-à-vis des erreurs de transmission est possible, respectivement nécessaire. Un changement de mode de codage est nécessaire si la qualité du canal se dégrade. Il est possible si la qualité du canal rencontrée s'améliore et permet d'assurer la qualité de la transmission avec un mode de codage moins consommateur de ressource, ou de l'augmenter en conservant la ressource allouée.

Dans le premier cas, qui correspond par exemple au GSM, une application directe conduit à choisir toujours des modes de codage identiques sur les deux directions. On a donc un mode de transmission bidirectionnel, qui correspond à l'utilisation d'un même mode unidirectionnel dans les deux sens de transmission. Un changement de mode de transmission bidirectionnel a donc lieu si un changement de mode de codage (compatible avec le mode de transmission) est possible pour les deux sens, ou nécessaire pour au moins un sens.

Ainsi, dans un système dans lequel lesdits modes de transmission correspondent à une allocation de ressources de transmission identiques dans chacun desdits sens de transmission, un changement de mode de transmission vers un mode de transmission correspondant à une ressource de transmission plus importante est effectué lorsque l'un au moins des modes de codage sélectionné dans au moins un sens de transmission correspond à un débit total incompatible avec la ressource allouée dans le mode de transmission en cours et que le supplément de ressource de transmission nécessaire est disponible (dans ce cas, on applique donc aux deux sens de transmission le même mode de codage, ce mode de codage étant celui des deux modes sélectionnés requérant le plus de ressource), et un changement de mode de transmission vers un mode de transmission correspondant à une ressource de transmission moins importante est effectué lorsque des modes de codage moins consommateur de ressource sont sélectionnés dans les deux sens. On choisit alors un mode de transmission bidirectionnel correspondant à l'utilisation sur les deux directions du même mode de codage, celui-ci étant le mode le plus consommateur de ressource parmi les deux modes sélectionnés dans chaque sens.

On peut procéder de la même manière pour la sélection entre des modes de transmission bidirectionnels de même ressource mais de robustesse différente.

Bien sûr, l'invention ne se limite pas à deux modes de codage, ni deux modes de transmission. Au contraire, l'invention peut être aisément généralisée à n modes de codage et m modes de transmission unidirectionnels ($m \geq n$, un même mode de codage pouvant correspondre à plusieurs modes de transmission). A partir de n modes de codage on peut définir n modes de transmission bidirectionnels pour lesquels un même mode de codage est utilisé dans les deux sens.

Selon une caractéristique importante de l'invention, on définit par ailleurs au moins un mode de transmission modifié, selon lesquels les modes de codage utilisés dans les deux sens sont différents.

Ainsi, dans le cas où on distingue n modes de codage unidirectionnels, on peut définir :

- n modes de transmission bidirectionnels correspondant à l'utilisation du même codage dans les deux sens (appelés modes primaires) ;
- n(n-1) modes de transmission bidirectionnels correspondant à des modes

de codage dans les deux sens (appelés modes secondaires). Parmi ces n(n-1) modes, il peut exister des cas tel que le débit brut est différent et correspond donc à des ressources minimales requises différentes dans les deux sens de transmission (plus précisément, il existe des modes de transmission modifiés de deux types : des modes avec même débit brut dans les deux sens, et des modes à débits bruts asymétriques). Si le système nécessite une symétrie d'allocation de ressource, on alloue la ressource correspondant au débit brut le plus élevé. La ressource allouée à au moins un desdits sens de transmission est donc supérieure à la ressource nécessaire pour transmettre les informations codées selon le mode de codage correspondant, et lesdites informations codées sont réparties dans une fraction des intervalles de temps correspondant à ladite ressource allouée.

Ce type de mode de transmission modifié est à tout à fait nouveau. Il n'est possible que parce que l'invention prévoit une approche distincte de la qualité de chaque sens de transmission. Il permet, dans le cas d'un mode bidirectionnel avec débit brut asymétrique, de libérer des intervalles de temps dans un sens, même si cela n'est pas possible dans l'autre sens. L'invention concerne d'ailleurs également spécifiquement un tel mode de transmission modifié.

Deux stratégies peuvent être envisagées pour les intervalles de temps non utilisés par ladite communication :

- soit ils ne portent aucun signal, ce qui permet de réduire les éventuelles interférences sur les cellules voisines. En effet, lorsqu'aucune émission n'existe dans une cellule, celle-ci n'induit pas d'interférence sur ses voisines,
- soit ils sont affectés au transport de données asynchrones.

Selon un mode de réalisation particulier de l'invention (prévu notamment pour le développement de l'actuelle norme GSM, pour les échanges de données), lesdits modes de transmission comprennent :

- un premier mode (dit plein débit) selon lequel lesdites données sont

transmises à raison d'un intervalle de temps toutes les trames de signal ; et

- un second mode (dit demi-débit) selon lequel lesdites données sont transmises à raison d'un intervalle de temps toutes les deux trames de signal.

Dans ce cas, un mode de transmission modifié consiste avantageusement à :

- transmettre, dans un premier sens de transmission, des informations codées selon un premier mode de codage à raison d'un intervalle de temps toutes les trames de signal (plein débit) ; et
- transmettre, dans un second sens de transmission, des informations codées selon un second mode de codage à raison d'un intervalle de temps toutes les deux trames de signal (demi-débit), les ressources allouées à la communication dans les deux sens de transmission correspondant à la ressource nécessaire pour transmettre des données selon ledit premier mode.

De façon avantageuse, l'analyse de la qualité de transmission consiste à déterminer au moins une des informations appartenant au groupe comprenant :

- le taux d'erreur bit (BER) du signal reçu ;
- la puissance du signal reçu;
- la distance séparant le mobile et la station de base ;
- une estimation de la réponse impulsionnelle du canal de transmission ;
- l'alignement temporel ;
- le rapport signal à bruit ;
- le rapport signal à interférence (C/I).

Selon un mode de réalisation avantageux de l'invention, lesdites sélections d'un mode de codage tiennent compte par ailleurs d'au moins une des informations appartenant au groupe comprenant :

- un niveau de qualité requis, pour la communication en cours ,
- un niveau de qualité requis, pour au moins un sens de transmission et pour la communication en cours ;
- un type de service transporté par ladite communication ;
- la charge de trafic.

Préférentiellement, la sélection d'un mode de codage comprend une étape de comparaison d'une information représentative de la qualité de la transmission avec au moins un seuil prédéterminé, et plus précisément, autant de seuils que de modes de codage.

Ladite information représentative de la qualité est avantageusement comparée à des seuils distincts selon le niveau de qualité requis pour la communication en cours, si plusieurs niveaux de qualités sont distingués.

Il est avantageux de définir deux jeux d'au moins un seuil, un premier jeu étant mis en oeuvre lorsque la qualité de transmission mesurée baisse, et un second jeu étant mis en oeuvre lorsque la qualité de transmission mesurée augmente.

Cela permet d'éviter des changements incessants de mode, lorsque le niveau mesuré est proche d'un seuil (effet "ping-pong").

De façon préférentielle, lesdits seuils sont des valeurs prédéterminées du rapport puissance utile sur interférence (C/I).

Selon un mode de réalisation préférentiel, la décision de changement de mode de codage et/ou de mode de transmission est prise dans ladite station de base, ledit mobile transmettant à ladite station de base une information représentative de la qualité de la transmission dans le sens station de base vers mobile.

De façon plus générale, le procédé de l'invention comprend préférentiellement une une étape de sélection entre au moins deux codages source et/ou une étape de sélection entre au moins deux codages canal.

Ladite sélection d'un mode de codage est réalisée de façon à, notamment, limiter la quantité de ressource allouée dans chaque sens de transmission et/ou à optimiser la qualité de la transmission.

Par exemple, les choix d'un codage source et d'un codage canal peuvent être fuit de façon à maintenir autant que faire se peut le débit brut en cours, et donc offrir la meilleure qualité possible sans modification de la ressource, ou encore de façon à assurer la meilleure qualité possible, en acceptant de modifier la ressource.

L'invention concerne également une station de base d'un système de radiocommunication mettant en oeuvre le procédé décrit ci-dessus. Une telle station de base comprend avantageusement :

- des moyens de détermination d'au moins une première information représentative de la qualité de la transmission, dans le sens mobile vers station de base ;
- des moyens de réception d'une seconde information représentative de la qualité de la transmission dans le sens station de base vers mobile ; et
- des moyens de modification du mode de codage et/ou du mode de transmission dans chaque sens de transmission, en fonction desdites première et seconde informations, et si nécessaire, de la charge de trafic ; et
- des moyens de transmission vers ledit mobile d'une information représentative des modes de codage et/ou de transmission sélectionnés.

Elle concerne encore une station mobile correspondante comprenant :

- des moyens de détermination d'au moins une information représentative de la qualité de la transmission, dans le sens station de base vers station mobile ;
- des moyens de transmission de ladite information vers ladite station de base ; et

- des moyens de réception d'une information représentative des modes de codage et/ou de transmission sélectionnés.

D'autres caractéristiques et avantages de l'invention apparaîtront à la lecture de la description suivant d'un mode de réalisation préférentiel de l'invention, donné à titre d'exemple illustratif et non limitatif, et des dessins annexés, dans lesquels :

- la figure 1 présente de façon schématique un réseau de radiocommunication cellulaire de type connu, dans lequel le procédé de l'invention peut être mis en oeuvre ;
- la figure 2 illustre un premier mode de mise en oeuvre de l'invention, dans le cas d'une double communication unidirectionnelle, chaque sens de transmission étant géré indépendamment ;
- les figures 3A et 3C illustrent les trois modes de transmission de données mis en oeuvre dans un mode de réalisation avantageux de l'invention, correspondant respectivement aux deux modes connus dits en anglosaxon "full rate" et "half rate", et au mode nouveau de l'invention, dit "half rate" modifié ;
- les figures 4A et 4B présentent le principe de la décision de changement de mode, selon le niveau de qualité requis pour la communication en cours, et les figures 5A et 5B présentent les différentes possibilités de fonctionnement correspondantes ;
- la figure 6 illustre les variations du taux d'erreurs binaires en fonction du rapport C/I, selon le niveau de qualité requis, et une possible détermination des valeurs de seuils des figures 4A, 4B, 5A et 5B ;
- la figure 7 présente un synoptique de la partie émission d'une station de base selon l'invention ;
- la figure 8 illustre le processus dc décision mis en oeuvre par la station de la figure 7, dans le cas où on considère n=2 modes ;
- la figure 9 est un synoptique illustrant le principe général de l'invention ;
- la figure 10 illustre un mode de mise en oeuvre du procédé de l'invention, généralisant, pour la sélection du mode de codage, le mode de réalisation de la figure 2 à n modes de codage ;
- la figure 11 présente les différents modes de transmission bidirectionnels possibles, lorsque n codages sont disponibles dans chaque sens de transmission, en fonction d'une information de qualité ;
- la figure 12 est une généralisation de la figure 6, au cas à n modes de codage correspondant à n codages canal pour les données à débit utile constant ;
- la figure 13 présente les courbes de performance de différents modes de codage pour la phonie (consistant en la combinaison de deux codeurs de parole et de trois codages de canal), en terme de "MOS" ;
- la figure 14 illustre, sous la forme d'une matrice, une numérotation possible pour les modes de transmission d'un système à n modes de codage dans chaque sens.

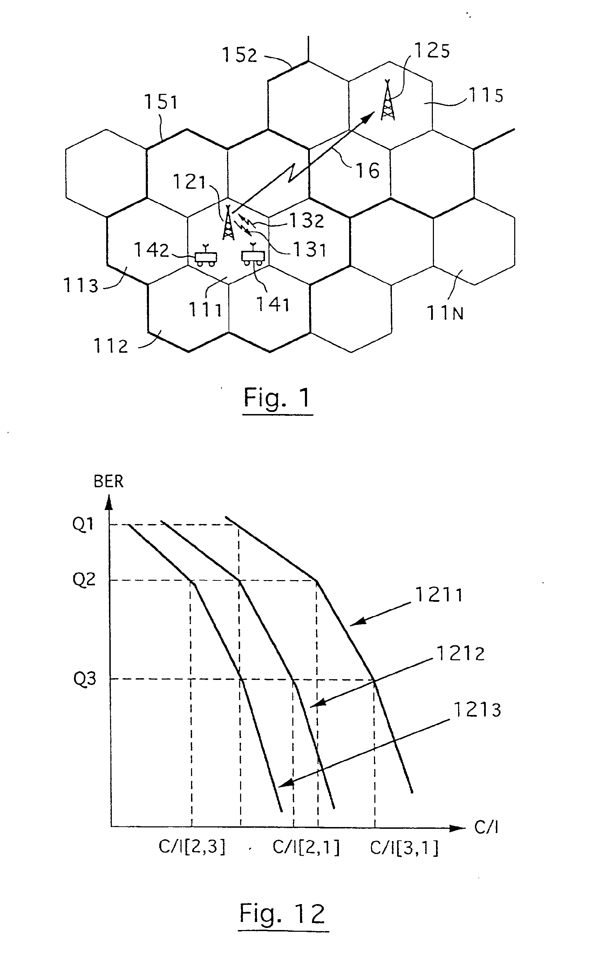

La figure 1 illustre de façon schématique un réseau cellulaire du type connu. Le territoire géographique couvert par le système de radiocommunication est divisé en cellules $11_1$ à $11_N$. Chaque cellule $11_1$ comprend une station de base $12_1$ capable d'échanger des signaux $13_1$, $13_2$ avec une pluralité de mobiles $14_1$, $14_2$ circulant dans ladite cellule $11_1$.

Deux cellules voisines $11_1$, $11_2$ exploitent des bandes de fréquence distinctes, de façon qu'il n'y ait pas d'interférences entre les signaux émis dans les deux cellules. Plus précisément, l'allocation des fréquences est basée sur une organisation des cellules en motifs $15_1$, $15_2$ de sept cellules. Bien sûr, les motifs (de même que les cellules) peuvent être de formes différentes, et peuvent contenir plus de sept cellules. A l'intérieur d'un même motif, les fréquences allouées sont différentes. En revanche, d'un motif $15_1$ à l'autre $15_2$, elles sont réutilisées. Ainsi, par exemple, la cellule $11_5$ utilise les mêmes fréquences que la cellule $11_1$.

En conséquence, les signaux $13_1$, $13_2$ échangés dans la cellule $11_1$ peuvent créer des interférences 16 avec les signaux échangés dans la cellule $11_5$. Un des objectifs de l'invention est de limiter ces interférences (un autre objectif essentiel étant bien sûr d'augmenter le nombre de conversations possibles dans une cellule), en réduisant autant que faire se peut les échanges $13_1$, $13_2$. En effet, lorsqu'il n'y a pas de signaux $13_1$ ou $13_2$ émis, il n'y a bien sûr pas d'interférences 16.

Pour ce faire, la caractéristique principale de l'invention est de contrôler le mode de codage en fonction d'une double analyse du canal de transmission, celui-ci étant considéré indépendamment pour chaque sens de transmission. Ainsi, il est possible de limiter sélectivement dans chaque sens de transmission les signaux émis.

Selon une autre approche, cette technique permet de libérer des ressources pour transmettre des données ou des paroles supplémentaires, et également d'optimiser la qualité de la transmission.

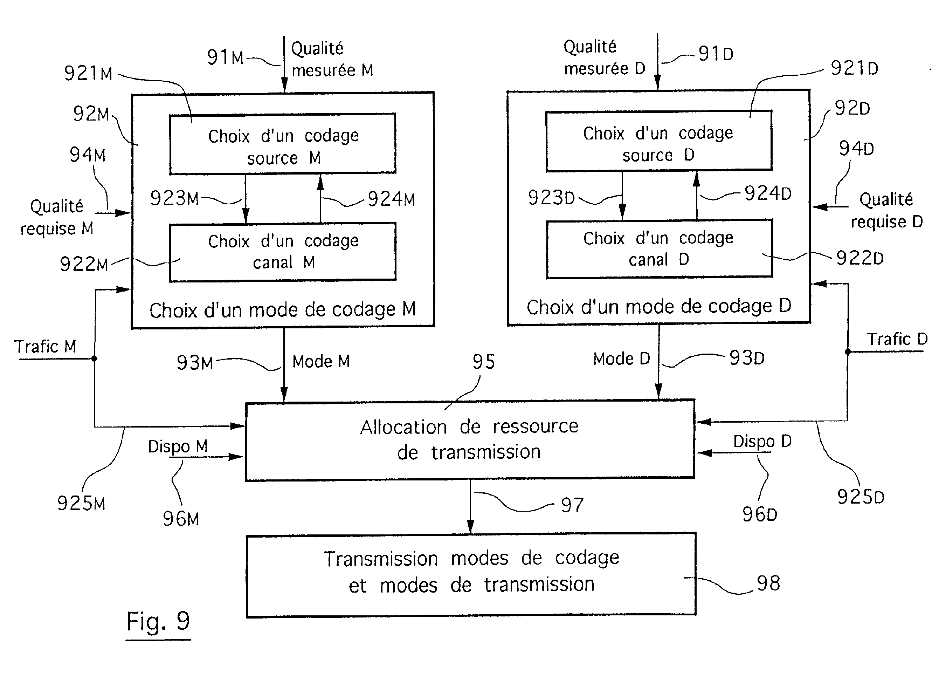

La figure 9 présente les caractéristiques principales du procédé de l'invention. Sur cette figure 9, les références concernant le sens de transmission montant sont indicées M, et les références concernant le sens descendant sont indicées D.

Ainsi que cela apparaît clairement sur cette figure, le codage est optimisé indépendamment dans chaque sens de transmission. Pour cela, deux mesures de qualité distinctes $91_M$ et $91_D$ sont effectuées, pour chaque sens de transmission (comme on l'a déjà indiqué, les qualités de transmission peuvent en effet être très différentes d'un sens à l'autre).

Ensuite, pour chaque sens, on sélectionne ($92_M$, $92_D$) un mode de codage $93_M$, $93_D$ en fonction de l'indicateur de qualité mesuré $91_M$, $91_D$, d'une information de charge de trafic $925_M$, $925_D$ et, éventuellement, d'une qualité requise $94_M$, $94_D$ pour la transmission.

Le choix $92_M$, $92_D$ du mode de codage comprend deux étapes :

- le choix d'un codage source $921_M$, $921_D$ ;
- le choix d'un codage canal $922_M$, $922_D$.

Le terme codage source correpond bien sûr, dans le cas de données, à la notion de débit utile.

Ce double choix est fait par exemple de façon à limiter le débit et à optimiser la qualité du codage, en fonction des caractéristiques du canal de transmission.

Bien sûr, les choix des deux codages ne sont pas indépendants. Au contraire, on choisit un mode de codage qui correspond à un débit utile (codage source) et un codage canal donnés, ainsi que cela est illustré par les flèches $923_M$, $923_D$, $924_M$, $924_D$.

Ces choix de modes de codage peuvent être fait dans l'une ou l'autre des stations. Dans tous les cas, chaque station effectue une (ou plusieurs) mesure(s) de la qualité du signal reçu, puis réalise le choix du mode de codage ou transmet à l'autre station cette mesure, de façon à ce que celle-ci fasse le choix correspondant.

Le procédé comprend encore une étape supplémentaire 95 d'allocation de ressource de transmission.

Cette allocation 95 est faite de façon à permettre la transmission des informations codées selon le mode de codage $93_M$, $93_D$, sélectionné en fonction bien sûr des disponibilités $96_M$, $96_D$, et toujours dans l'objectif de limiter la ressource utilisée.

Si le système prévoit que l'allocation de ressource doit être symétrique, celle-ci tient compte du mode de codage $93_M$, $93_D$ présentant le débit brut le plus élevé.

Ensuite, le choix du mode de codage est transmis à l'autre station, de façon qu'elle adapte son codage et/ou son décodage.

Par ailleurs, le procédé de l'invention peut prendre en compte une information de trafic $925_M$ et $925_D$, pour le choix du mode de codage et/ou du mode de transmission, notamment dans le cas où le débit utile peut être variable (particulièrement pour les services de données).

Le ou les modes de codage et de transmission 97 sélectionné(s) sont ensuite transmis (98) vers l'autre station, pour que cette dernière adapte son codage et/ou son décodage.

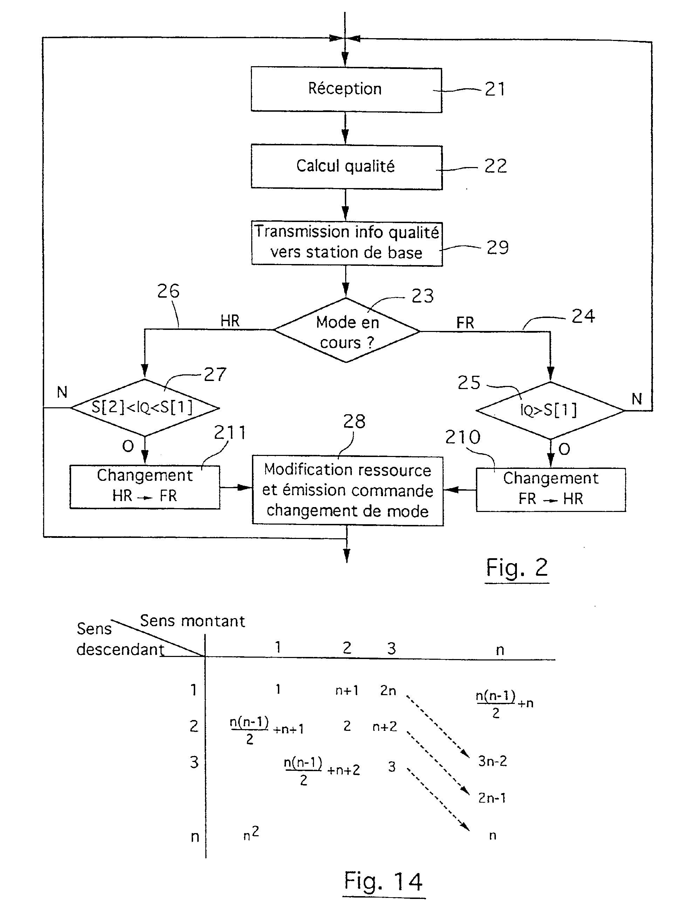

Plusieurs modes de réalisation de l'invention peuvent donc être envisagés, selon le type de système considéré. La figure 2 illustre un premier mode de réalisation de l'invention, dans lequel chaque sens de transmission est géré indépendamment (double communication unidirectionnelle), et dans lequel deux modes de transmission sont disponibles, pour un débit utile constant.

Ce cas est le plus simple, puisqu'aucun problème d'asymétrie de ressources particulier n'est rencontré. La figure 2 présente le traitement fait dans la station maitresse (station de base ou mobile), dans le cas où la communication concerne un échange de données.

Dans chaque station (de base et mobile), on reçoit (21) un signal transmis, puis on en détermine (22) la qualité Q, par une méthode connue. Il existe en effet de très nombreux indicateurs de la qualité d'un signal, dont certains sont déjà calculés dans les stations, pour d'autres applications. C'est notamment le cas des critères suivants :

- le taux d'erreur bit (BER) du signal reçu ;
- la puissance du signal reçu ;
- la distance séparant le mobile et la station de base ;
- une estimation de la réponse impulsionnelle du canal de transmission ;
- l'alignement temporel ;
- le rapport signal à bruit ;
- le rapport C/I.

Bien sûr plusieurs de ces critères peuvent être pris en considération, pour affiner l'analyse.

Le mobile transmet (29) l'information de qualité à la station de base, qui prend les décisions pour chaque sens de transmission.

Le système prévoit au moins deux modes de transmission, par exemple les modes dits "full rate" (FR) et "half rate" (HR), correspondant à des qualités de codage canal (rendement de codage) distincts. En fonction de la valeur $I_Q$, il est possible de changer de mode en cours de transmission, pour chaque sens de transmission.

Ainsi, en fonction du mode de transmission en cours (23), on effectue les comparaisons suivantes :

- si la transmission est en mode "full rate" 24, et que la qualité $I_Q$ est supérieure à un seuil S[1] prédéfini (25), il est possible de passer (210) au mode "half rate". On limite ainsi le débit tout en s'assurant que la qualité de transmission sera suffisante ;
- si la transmission est en mode "half rate" 26, et que la qualité $I_Q$ est supérieure à un seuil S[2] (27), il est souhaitable de passer (211) en mode "full rate" pour maintenir la qualité de réception.

Dans le cas d'un signal de parole, les deux modes considérés peuvent être le mode "half rate" (au sens défini dans la norme GSM) et le mode "half rate surprotégé" (correspondant à l'utilisation d'un codeur de parole correspondant au mode "half rate", avec un codage canal à robustesse renforcée, de façon à occuper une ressource d'un intervalle de temps toutes les trames). Un seul seuil est alors pris en compte (il n'y a pas plusieurs niveaux de qualité).

Lorsque la réponse à l'un des tests 25 et 26 est positive, on émet (28) une commande de changement de mode vers la station mobile, et on modifie la ressource en conséquence. Sinon, aucun changement n'est effectué.

L'émission 28 d'une commande peut bien sûr prendre en compte de nombreux autres critères et en particulier les ressources disponibles. Elle peut également mettre en oeuvre une temporisation, pour éviter des changements incessants.

Par ailleurs, il est avantageux de prévoir la possibilité de requérir un niveau de qualité donné (parmi au moins deux possibles) à l'initialisation de la communication, éventuellement distinct dans chaque sens de transmission. Dans ce cas, on définit autant de seuils Qi que nécessaires.

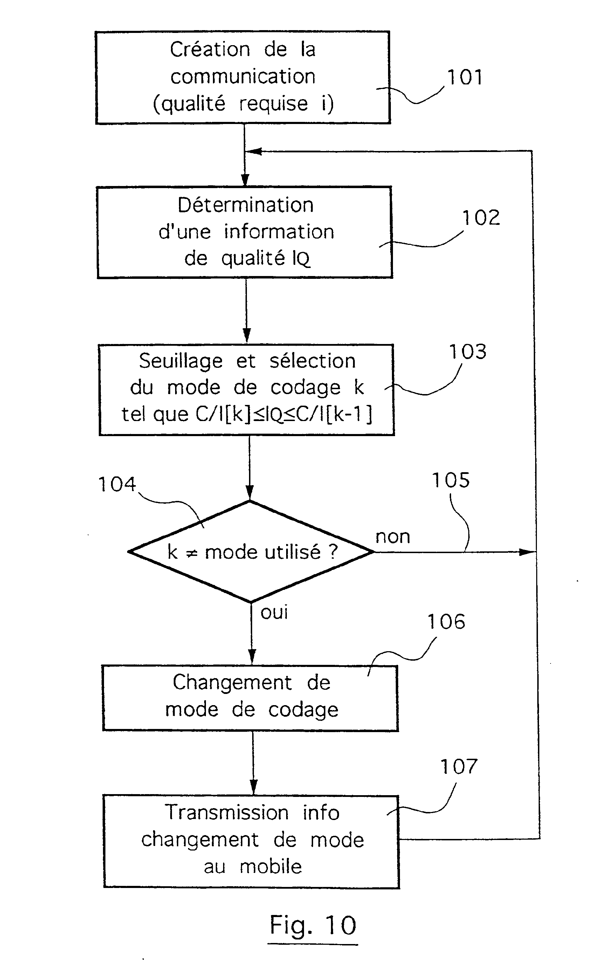

La figure 10 présente ainsi une généralisation du cas de la figure 2 à n modes unidirectionnels (pour les services de données à débit utile constant ou la phonie).

Après avoir créé (101) la communication avec un niveau de qualité i choisi parmi n niveaux possibles, on détermine (102) régulièrement (ou on obtient de l'autre station) une information de qualité $I_Q$, puis on compare (103) $I_Q$ à une série de seuils Si. Par exemple, si le critère de qualité est C/I, on compare $I_Q$ à C/I[i], et on sélectionne le mode de codage k tel que :

$$C/I[k] \leq I_Q \leq C/I[k-1]$$

Si le mode de codage k est celui déjà sélectionné (104), aucun traitement n'est effectué (105). Sinon, on effectue le changement de mode de codage requis (106), puis on transmet (107) à l'autre station l'information de changement dc mode.

Il est à noter que l'information de qualité $I_Q$ peut être exprimée en des termes différents que la qualité du service. Par exemple, pour les données, la qualité de servie peut se mesurer en taux d'erreur binaire (BER), et la décision être prise sur la distance.

Bien sûr, l'ordre des seuils peut être inversé, par exemple si le critère choisi est la distance. En effet, quand la distance est grande, la qualité est statistiquement plus faible, et on a besoin d'un mode de codage plus robuste. Par contre, pour une faible distance, le rapport C/I est statistiquement plus grand, et est caractéristique d'une situation favorable.

Dans le cas de services de données dont le débit utile peut être variable on doit admettre un délai de transmission des informations variables. Par contre, les informations doivent être reçues avec une qualité minimum. On peut donc avoir une série de modes correspondant à un débit utile variable avec un débit brut constant ou variable, le dernier cas impliquant une ressource variable. Cela introduit des temps de transmission différents, pour une même quantité d'informations transmises.

On pourra changer de modes en fonction de la qualité du canal, mais aussi en fonction de la charge de trafic du réseau. Pour chaque débit utile, on aura une série de modes correspondant à une ressource différente. Cela revient à rajouter une dimension pour le classement des modes. Selon la charge de trafic, on choisira, parmi les modes de codage amenant l'utilisation d'une certaine ressource, le mode permettant d'assurer la qualité du service.

La charge de trafic peut se mesurer comme étant le nombre d'intervalles de temps ("time-slots") utilisés dans la cellule, connu de la station de base).

Selon une variante, il est possible de transmettre systématiquement l'information de qualité, le récepteur prenant alors lui-même la décision de changement de mode. Cette technique permet de simplifier la vérification de la disponibilité de la ressource. En contrepartie, il faut transmettre une information indiquant le mode utilisé.

Dans de nombreux systèmes de radiocommunication, et notamment dans le système GSM, l'allocation de ressources est symétrique : la même quantité de ressources doit être allouée à chaque sens de transmission, dans ce cas, le changement de mode de transmission (dans le sens habituel donné à ce terme) n'est possible que lorsqu'il est acceptable ou nécessaire dans les deux sens de transmission. Toutefois, l'invention propose, pour les données, un mode nouveau, dit mode modifié, qui repose sur une approche nouvelle, à double niveau : on contrôle d'une part les changements de codage, dans chaque sens de transmission, et d'autre part les changements de mode.

Dans le cas de la phonie, une démarche similaire peut être mise en oeuvre, en changeant les termes "full rate" par "half rate surprotégé".

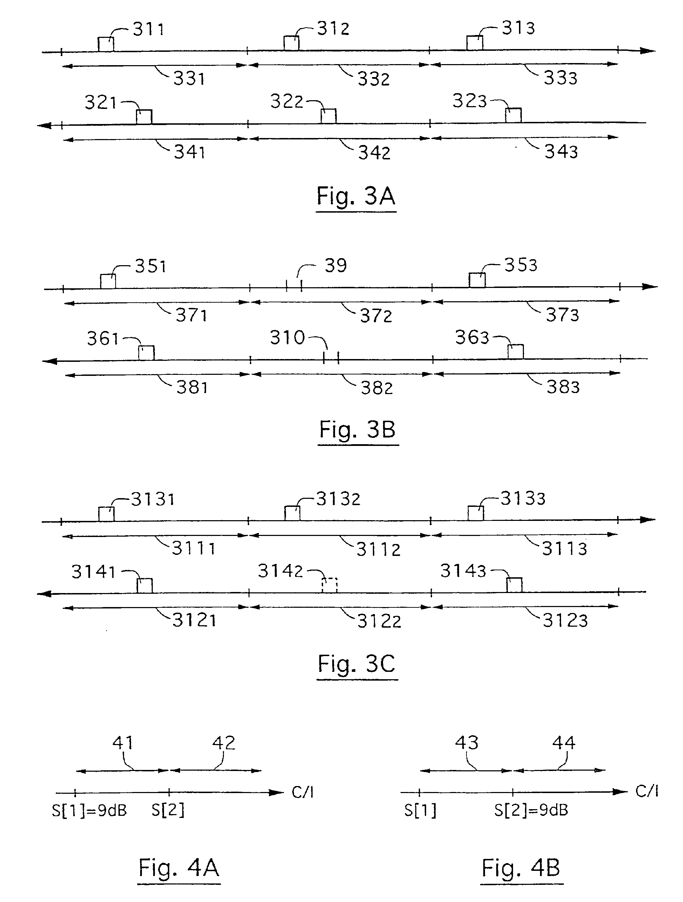

Les figures 3A à 3C illustrent les trois modes possibles dans le cas où deux modes de transmission bidirectionnels ("full rate" et "half rate") sont disponibles, pour un service de donnée à débit utile constant. Bien sûr, plusieurs autres modes sur le même modèle peuvent être définis.

La figure 3A illustre le mode connu dit "full rate", dans lequel un intervalle 31i, 32i est associé à chaque trame $33_i$, $34_i$ dans chaque sens de transmission.

Dans ce mode de transmission, les données sont codées à l'aide d'un premier codage canal, qui correspond à un débit de 22,8 kbits/s (en GSM).

La figure 3B illustre le second mode connu, dit "half rate", correspondant à un second codage canal, d'un débit de 11,4 kbits/s. Les premier et second codages peuvent par exemple correspondre à des taux de codage correcteur d'erreur différents.

Selon ce second mode, un intervalle de temps $35_i$, $36_i$ est alloué à la communication uniquement une trame sur deux $37_1$, $37_3$, $38_1$, $38_3$. Dans les trames intermédiaires $37_2$, $38_2$, l'intervalle de temps correspondant 39, 310 peut être affecté à une autre communication.

la figure 3C illustre le mode "half rate" modifié selon l'invention. Ce mode modifié est mis en oeuvre lorsque le canal de transmission permet l'utilisation de codages canal différents dans les deux sens de transmission. Dans ce cas, la même ressource que dans le mode "full rate" (figure 3A) reste alloué : chaque trame $311_i$, $312_i$ comprend un intervalle de temps $313_i$, $314_i$ pour la communication, mais :

- dans un premier sens, on met en oeuvre le premier codage canal, et tous les intervalles de temps 313, comportent des données ;
- dans un second sens, on utilise le second codage canal, qui correspond à un débit moitié du précédent, et on ne transmet des données que dans un intervalle de temps $314_1$, $314_3$ sur deux. Les intervalles $314_2$ non utilisés sont soit affectés à la transmission de données asynchrones soit maintenus vides pour limiter les interférences.

Un système connu de ce type peut donc permettre de définir deux types de service, correspondant à des qualités différentes. Cette qualité est par exemple mesurable en taux d'erreur binaire en sortie (BER (Bit Error Rate en anglo-saxon)). Un service correspond à l'utilisation d'un mode de transmission sur les deux directions dans des conditions d'opérabilité (valeur de C/I ou niveau de puissance reçue Eb/N0). Par exemple, en GSM, le point d'opérabilité correspond à C/I = 9dB.

Le service mis en oeuvre appartient donc à lin ensemble {service de "bonne" qualité, service de qualité "moyenne"}, correspondant respectivement à un débit élevé et à un débit réduit dans des conditions normales.

Selon l'invention, il est possible de modifier le mode de transmission en cours de communication, avec le double objectif de maintenir le niveau de qualité requis et de limiter la quantité d'information émise.

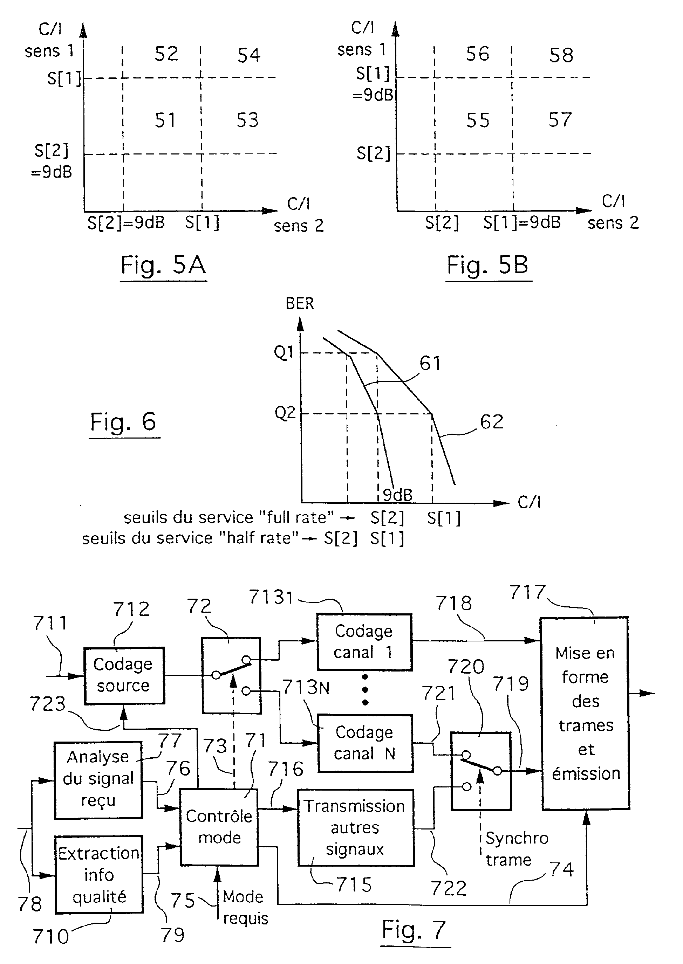

Les figures 4A et 4B illustrent le principe de décision dans les deux types de qualité, et donc de service, respectivement, et les figures 5A et 5B présentent les différentes possibilités de fonctionnement.

La figure 4A correspond au niveau de qualité élevée. Lorsque le C/I est compris entre S[2] (= 9 dB) et S[1] (supérieure à 9 dB), on utilise le mode de codage "full rate" 41. Au delà de S[1], on met en oeuvre le mode de codage "half rate" 42. En deçà de S[2], la communication risque d'être interrompue.

Cela permet de distinguer les quatre types de fonctionnement illustrés en figure 5A, pour une communication bidirectionnelle, lorsqu'un niveau de qualité élevé est requis :

- 51 : C/I compris entre 9 dB et S[1] dans les deux sens : mode "full rate" dans les deux sens ;
- 52 et 53 : C/I compris entre 9 dB et S[1] dans un sens, et supérieur à S[1] dans l'autre sens : mode "full rate" dans un sens et mode "half rate" modifié selon l'invention dans l'autre sens ;
- 54 : C/I supérieur à S[1] dans les deux sens : mode "half rate" modifié dans les deux sens, si le système ne prévoit pas la possibilité de changer l'allocation de ressources en cours de communication, ou mode "half rate" dans les deux sens, si le changement est possible.

La figure 4B correspond au niveau de qualité réduite. Lorsque C/I est compris entre S[1] = 9 dB et S[2], on utilise le mode de codage "full rate" 43. Au delà de S[2], on met en oeuvre le codage "half rate" 44. En deçà S[2], la communication risque d'être interrompue.

Cela permet de distinguer les quatre types de fonctionnement illustrés en figure 5B, lorsqu'un niveau de qualité élevé est requis :

- 55 : C/I compris entre S[2] et S[1] = 9 dB dans les deux sens : mode "full rate" dans les deux sens ;
- 56 et 57 : C/I compris entre S[2] et S[1] = 9 dB dans un sens, et supérieur à S[1] = 9 dB dans l'autre sens : mode "full rate" dans un sens et mode "half rate" modifié selon l'invention dans l'autre sens ;
- 58 : C/I supérieur à S[1] = 9 dB dans les deux sens : mode "half rate" modifié dans les deux sens, si le système ne prévoit pas la possibilité de changer l'allocation de ressources en cours de communication, ou mode "half rate" dans les deux sens, si la changement est possible.

La figure 6 présente les variations du taux d'erreurs binaires BER en fonction de C/I, pour les modes "full rate" 61 d'une part et "half rate" ou "half rate" modifié 62 d'autre part.

C/I est le point normal d'opérabilité (C/I = 9dB par exemple). Les niveaux de qualité souhaités $Q_1$, respectivement $Q_2$, permettent de définir les seuils S[1] et S[2] (où S[i] est un seuil permettant de décider de passer du mode de codage i à i+1 (c'est-à-dire "half rate" (i=1) à "full rate" (i=2)) et inversement), pour les deux types de services, de qualité moyenne et de bonne qualité respectivement, équivalant à l'utilisation des modes "half rate" et "full rate" respectivement, dans des conditions normales d'opérabilité.

Dans l'exemple décrit ci-dessus, les taux de codage sont dans un rapport 2. Un autre rapport quelconque peut bien sûr être choisi. Par ailleurs, ce principe peut être aisément généralisé à un nombre n plus élevé de modes de codage.

Si on considère le cas de n modes de codage différents, numérotés de 1 à n, dans le sens de robustesse croissante, et donc de ressource allouée possiblement croissante, et toujours dans l'hypothèse ou la ressource allouée est bidirectionnelle, on dispose de $n^2$ (n + (n(n-1))) modes de transmission bidirectionnels. Les n premiers modes correspondent à l'utilisation d'un même mode de codage i dans les deux sens. Les (n(n-1)) autres modes bidirectionnels correspondent à l'utilisation de modes de codage différents.

Dans ce dernier cas, la ressource allouée est celle requise par le mode de codage le plus exigeant. Ainsi, si on note Ci les codages et Mi les modes, alors :

- pour $1 \le i \le n$ : Mi correspond au codage Ci dans les deux sens ;
- pour $n+1 \le i \le n^2$ : Mi correspond au codage C1 dans un sens et au codage Cm dans l'autre sens où 1 et m sont donnés par la matrice symétrique présentée en figure 14.

Les colonnes $141_1$ à $141_n$ correspondent au mode de codage sélectionné dans le sens montant, les niveaux $142_1$ à $142_n$ au mode de codage dans le sens descendant. On définit ainsi une notation des n(n- 1) modes de transmission $143_i$.

La qualité Qi se mesure par exemple en terme de taux d'erreur binaire pour des services de données. Qi peut se mesurer en terme de "Mean Opinion Score" (MOS) pour des services de transmission de parole.

On a donc au maximum n services différents. Pour les données, on peut en avoir effectivement jusqu'à n mais, pour la parole, on ne s'intéresse a priori qu'à un seul service dont il s'agit d'étendre la plage d'opérabilité.

La figure 12 est similaire à la figure 6 mais présente n courbes 1211 à 121n correspondant aux n codages, dans le cas de données à débit utile fixe..

Les seuils C/I[i, j] sont définis comme les valeurs minimales de C/I permettant à un codage Cj d'assurer la qualité Qi. En l'occurence. C/I[i, j] correspond à l'abscisse du point de la courbe donnant les performances du codage j pour une ordonnée égale à Qi. Pour une condition dite normale d'opérabilité, on a C/I[i, i] = point d'opérabilité = 9dB dans le GSM.

Pour la transmission de parole, on se place en terme de MOS, et la seule différence est que les courbes sont inversées. En effet, une meilleure qualité de service correspond à un meilleur MOS.

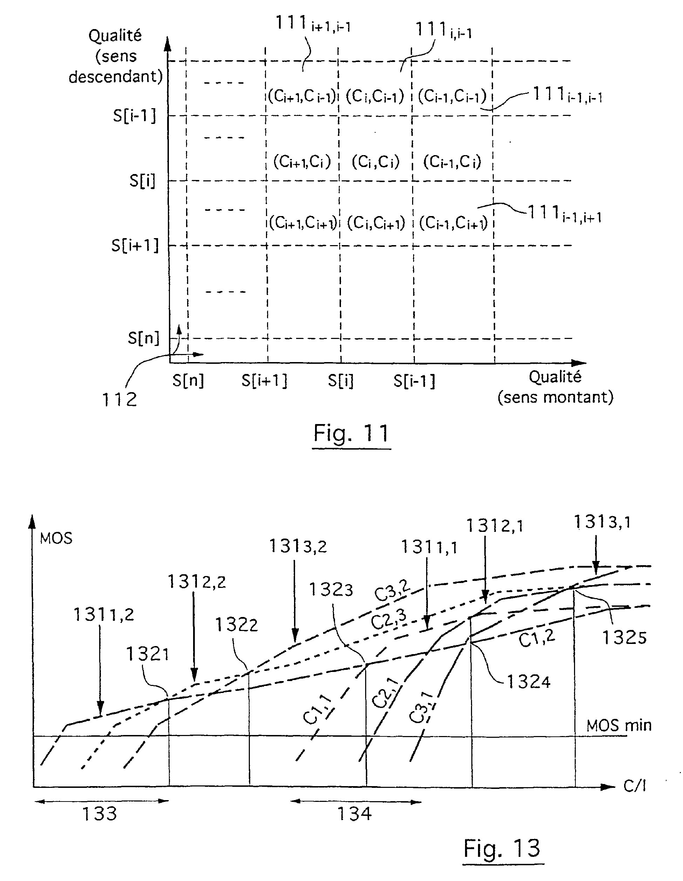

La figure 11 illustre ainsi les différentes possibilités dans un tel cas (la figure 11 correspond à l'extension des figures 5A et 5B), pour un service i donné. Les seuils S[j] correspondent alors aux C/I[i, j]. La robustesse du codage augmente pour n croissant.

En abscisse et en ordonnée figurent les n différentes seuils S[i] à considérer. Ces seuils permettent de définir des zones $111_{k, l}$ dans lesquelles on indique le couple (Ck, Cl), où Ck est le mode de codage à utiliser dans le sens montant et Cl le mode de codage à utiliser dans le sens descendant.

Si k=l, on sélectionne le mode de transmission k (dans la situation où le système impose une symétrie dans l'allocation, sinon, pour déterminer le mode bidirectionnel, on se réfère à la matrice de la figure 14.

En deçà (112) du seuil S[n] aucune communication n'est possible.

Les décisions dc changement de mode sont avantageusement prises dans une seule des deux stations communiquant, et préférentiellement dans la station de base. Toutefois, bien sûr, ces décisions peuvent être prises dans le mobile.

La figure 7 illustre les moyens mis en oeuvre dans une telle station de base, pour n=2. Les moyens 71 de contrôle de mode déterminent le type de codage canal à mettre en oeuvre, d'une part dans le sens station de base vers mobile, en agissant sur le sélecteur 72 par la commande 73 pour choisir un codeur de canal parmi les codeurs de canal $713_1$ et $713_N$, et d'autre part dans le sens mobile vers station de base, en transmettant au mobile une commande 74 de changement de mode, si nécessaire.

Ces moyens 71 de contrôle agissent en fonction d'une qualité de service requise 75, d'une information 76 représentative de la qualité de la transmission dans le sens mobile vers station de base, obtenue par analyse 77 du signal reçue 78, et d'une information 79 représentative de la qualité dans le sens station de base, extraite (710) des données transmises par le mobile.

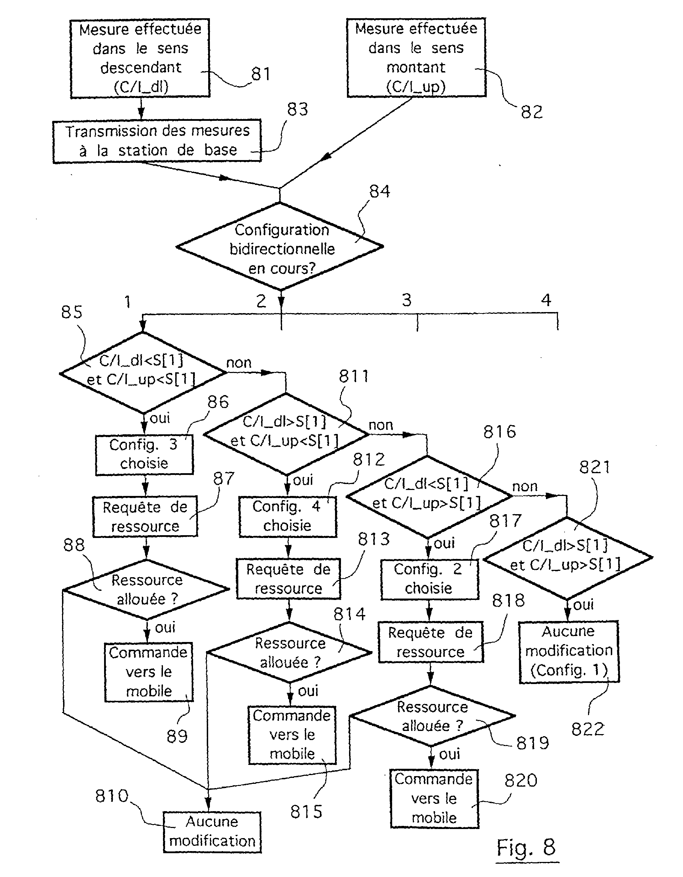

Le traitement mis en oeuvre dans le module 71 sont décrits plus en détail par la suite, en liaison avec la figure 8.

Il est clair, par ailleurs, que le même principe peut être mis en oeuvre pour agir sur la sélection d'un codage source parmi plusieurs, par exemple par la commande 723.

Les données 711 à transmettre vers le mobile subissent un codage source 712, puis un codage canal $713_i$, en fonction de la position du sélecteur 72.

Les codages $713_i$ correspondent par exemple à des taux de codage différents. Lorsque les modes de codage sélectionnés pour les sens montant et descendant mènent à des débits buts différents (ce qui est automatiquement le cas si on a un seul codeur de parole et si on prend deux codage de canal différents), on utilise un mode de transmission bidirectionnels dit modifié et les données codées pour l'un des sens de transmission n'utilisent qu'une partie de la ressource allouée. La station de base peut alors autoriser la transmission de données asynchrones dans les intervalles de temps laissés libres.

Par exemple dans le cas d'un système à deux codeurs canal correspondant aux modes de transmission des figures 3A et 3B, la station de base peut comprendre un module 717 de mise en forme et d'émission, qui reçoit (en ce qui concerne la communication considérée) soit les données 718 délivrées par un codeur canal plein débit $713_1$, soit les données 719 délivrées par un sélecteur 720, qui délivre alternativement des données 72 produites par un codeur canal $713_N$ et des données asynchrones 722.

Les commandes de changement de mode et les informations de qualité sont transmises par exemple parmi les données de protocole. Dans le cas du GSM elles peuvent notamment être placées dans les canaux ACCH ou FACCH.

On décrit maintenant, en relation avec la figure 8, le processus de décision du module 71, dans le cas (aisément généralisable, par exemple à partir de la figure 10) de deux modes de codage.

Le module effectue (81) une mesure 84 de qualité dans le sens descendant (C/I_dl) et la transmet (82) à la station de base. Dans le même temps, la station de base effectue (83) une mesure (85) de la qualité dans le sens montant (C/I_up). Quatre traitements sont considérés, selon la configuration bidirectionnelle en cours, parmi les configurations suivantes :

- 1 : "half rate" dans les deux sens de transmission ;
- 2 : "full rate" dans les deux sens de transmission ;
- 3 : "half rate" modifié dans le sens descendant et "full rate" dans le sens montant ;
- 4 : "half rate" modifié dans le sens montant et "full rate" dans le sens descendant.

Seul le cas correspondant à la configuration 1, le plus complexe, est décrit.

On effectue les opérations suivantes :

- si C/I_dl < S[1] et C/I_up < S[1] (85) alors
  choisir la configuration 2 (86) ;
  requérir la ressource supplémentaire nécessaire (87) ;
  si la ressource est allouée (88) alors
  transmettre (89) la commande au mobile
  sinon : pas de modification (810) ;
  sinon
- si C/I_dl > S[1] et C/I_up < S[1] (811) alors
  choisir la configuration 3 (812) ;
  requérir la ressource supplémentaire nécessaire (813) ;
  si la ressource est allouée (814) alors
  transmettre (815) la commande au mobile
  sinon : pas de modification (810) ;
  sinon
- si C/I_dl < S[1] et C/I_up >S[1] (816) alors
  choisir la configuration 4 (817) ;
  requérir la ressource supplémentaire nécessaire (818) ;
  si la ressource est allouée (819) alors
  transmettre (820) la commande au mobile
  sinon : pas de modification (810) ;
  sinon
- si GI dl >S[1] et C/I_up >S[1] (821) alors
  pas de modification (822).

Si les configurations initiales sont 2, 3 ou 4, on fait les mêmes choix de configuration bidirectionnelle, mais on garde la même ressource tant qu'on ne choisit pas la configuration 1. Si cette dernière est sélectionnée, on relâche la ressource excédentaire.

Comme on l'a déjà indiqué, l'invention s'applique également à la transmission de la parole. Plusieurs situations peuvent également être rencontrées :

- on dispose d'une série de modes de transmission dont le débit utile est variable mais le débit brut est constant. On alloue donc toujours la môme ressource radio. On peut faire en sorte d'avoir toujours le même mode dans les deux sens ou on admet d'avoir des modes différents mais correspondant à la même ressource ;

- on peut avoir une série de modes de transmission avec un débit utile fixe, selon le principe déjà décrit pour des données (en particulier pour deux modes de codage "half rate" et "half rate surprotégé" ;
- on peut avoir, dans le cas le plus général, une série de modes de codage qui correspondent à des débits utiles et bruts, et donc des ressources allouées, variables. On peut tracer les courbes donnant les performances en termes de MOS ("Mean Opinion Score") des différents modes en fonction du rapport puissance utile à interférence (C/I) ainsi que cela est illustré en figure 13. Les courbes $131_{i,j}$ correspondent aux codages i, j, où j est relatif au débit brut et i et au taux de codage de canal, j augmente quand le débit brut augmente et i augmente quand la robustesse baisse. Les codes 133 utilisent 2 intervalles de temps ("slots") par trame, et les codes 134 un intervalle de temps par trame.

Dans ce dernier cas, on peut envisager deux stratégies différentes de changement de modes :

- étant donnée l'information de qualité, on choisit sur chacune des directions le mode qui permet d'avoir la meilleure qualité de service en termes de MOS sans se soucier des différences de ressources radio existant entre les modes. Puis on alloue la ressource bidirectionnelle corespondant au mode le plus consommateur des deux directions. Dans l'exemple de la figure 13, on utiliserait successivement $C_{3,1}$, $C_{3,2}$, $C_{1,2}$ pour un C/I se dégradant continûment. (Certains modes ne sont donc pas utilisés). Les seuils de décision de changement de mode correspondent aux intersections $132_1$ à $132_5$ entre les courbes correspondant à ces différents modes.
- étant donnée l'information de qualité, on choisit pour chaque direction le mode le moins consommateur de ressource qui permet d'assurer la qualité de service et qui fournit la meilleure qualité de service par rapport aux autres modes consommant la même ressource. Dans l'exemple de la figure 13, on utiliserait les modes $C_{3,1}$, $C_{2,1}$, $C_{1,1}$, $C_{3,2}$, $C_{2,2}$, $C_{1,2}$ successivement pour un C/I se dégradant continûment. Cela signifie que lorsque le C/I se dégrade, on change de ressource uniquement si on n'a aucune autre solution pour assurer la qualité de service. Si le C/I s'améliore, on change de mode pour un mode moins consommateur de ressource qui assure la qualité de service. Les seuils de décidons peuvent correspondre aux intersections entre les courbes des modes utilisés cités ci-dessus.

Dans les deux cas, on exploite donc n modes que l'on peut renuméroter Ci(i=1,..n) et n seuils de qualité Si(i=1,..., n), que l'on peut illustrer par un graphique identique à celui de la figure 11).

La seule différence par rapport au cas déjà traité est que deux modes d'indices différents ne correspondent pas systématiquement à une ressource différente et cela mène à un mode modifié uniquement si le débit brut est différent.

On peut utiliser le même type d'algorithme de décision que décrit en relation avec la figure 10. On peut donc prévoir deux séries de seuils selon que l'on anticipe un changement vers un mode plus ou moins robsute pour éviter des effets de "ping pong".

## Revendications

1.    Procédé pour échanger des signaux numériques bidirectionnels entre au moins une station mobile et un réseau dans un système radio mobile prévoyant au moins deux modes de codage, chaque mode correspondant à un codage source prédéterminé et à un codage canal prédéterminé pour la transmission d'un signal utile, pour chaque sens de transmission, dans lequel, lors d'une communication entre une station mobile et une station de base, on réalise deux analyses distinctes de la qualité de transmission ($91_M$, $91_D$), pour chaque sens de transmission respectivement, et, pour chacun desdits sens de transmission, on sélectionne ($92_M$, $92_D$) un desdits modes de codage ($93_M$, $93_D$), en fonction de l'analyse correspondante de qualité de transmission,
dans lequel la sélection d'un mode de codage inclut une étape de comparaison d'une information ($I_Q$) représentative de la qualité de transmission mesurée avec au moins un seuil prédéterminé (Si) qui est une valeur prédéterminée du rapport signal à interférence (C/I), et dans lequel deux jeux d'au moins un seuil sont définis, un premier jeu étant mis en oeuvre lorsque la qualité de transmission mesurée baisse, et un second jeu étant mis en oeuvre lorsque la qualité de transmission mesurée augmente

2.    Procédé selon la revendication 1, dans lequel la sélection d'un mode de codage inclut la sélection d'un codage source et la sélection d'un codage canal.

3.    Procédé selon l'une des revendications 1 ou 2, dans lequel l'analyse de la qualité de transmission consiste à déterminer au moins une des informations appartenant au groupe comprenant :

      - le taux d'erreur bit (BER) du signal reçu ;
      - la puissance du signal reçu ;
      - la distance séparant le mobile et la station de base ;
      - une estimation de la réponse impulsionnelle du canal de transmission ,
      - l'alignement temporel ;
      - le rapport signal à bruit ;
      - le rapport signal à interférence (C/I) ;
      - la charge de trafic.

**4.** Procédé selon l'une des revendications 1 à 3, dans lequel ladite sélection d'un mode de codage tient également compte d'au moins une des informations appartenant au groupe comprenant.

  - un niveau de qualité requis, pour la communication en cours ;
  - un niveau de qualité requis, pour au moins un sens de transmission et pour la communication en cours ;
  - un type de service transporté par ladite communication ;
  - la charge de trafic.

**5.** Procédé selon l'une des revendications 1 à 4, **caractérisé en ce que** ladite sélection d'un mode de codage est réalisée de façon à limiter la quantité de ressource allouée dans chaque sens de transmission et/ou à optimiser la qualité.

**6.** Système radio mobile incluant au moins une station mobile et un réseau aptes à échanger des signaux numériques bidirectionnels entre au moins une station mobile et le réseau,
ledit système prévoyant au moins deux modes de codage ($93_M$, $93_D$), chaque mode correspondant à un codage source prédéterminé ($921_M$, $921_D$) et à un codage canal prédéterminé ($922_M$, $922_D$) pour la transmission d'un signal utile, pour chaque sens de transmission,
la station mobile comportant des moyens pour mesurer la qualité de transmission dans le sens descendant ($91_D$) lors d'une communication entre station mobile et réseau,et pour transmettre au réseau une information représentant la qualité de transmission mesurée dans le sens descendant,
le réseau comportant des moyens pour mesurer la qualité de transmission dans le sens montant ($91_M$), lors d'une communication entre une station mobile et le réseau,et le réseau comportant des moyens (71) de contrôle de mode qui sélectionnent pour chque sens de transmission un desdits modes de codage, en fonction d'une information représentative de la qualité de transmission mesurée dans le sens correspondant,
le réseau comportant, pour sélectionner ($92_M$) un desdits modes de codage pour le sens montant, des moyens pour comparer la qualité de transmission mesurée dans le sens montant ($91_M$) avec au moins un seuil prédéterminé (Si) qui est une valeur prédéterminée du rapport signal à interférence (C/I)
, et dans lequel le réseau comporte, pour comparer la qualité de transmission mesurée dans le sens montant ($91_M$) avec au moins un seuil prédéterminé, des moyens pour mettre en oeuvre deux jeux d'au moins un seuil, un premier jeu étant mis en oeuvre lorsque la qualité de transmission mesuré baisse, et un second jeu étant mis en oeuvre lorsque la qualité de transmission mesurée augmente.

**7.** Système radio mobile selon la revendication 6 , dans lequel lesdits moyens de contrôle de mode comportent, pour sélectionner un desdits modes de codage, des moyens pour sélectionner un codage source et des moyens pour sélectionner un codage canal

**8.** Système radio mobile selon l'une des revendications 6 ou 7, dans lequel lesdits moyens pour mesurer la qualité de transmission comportent des moyens pour déterminer au moins une des informations appartenant au groupe comprenant :

  - le taux d'erreur bit (BER) du signal reçu ;
  - la puissance du signal reçu ,
  - la distance séparant le mobile et la station de base ;
  - une estimation de la réponse impulsionnelle du canal de transmission ;
  - l'alignement temporel ;
  - le rapport signal à bruit ;
  - le rapport signal à interférence (C/I) ;
  - la charge de trafic.

**9.** Système selon l'une des revendications 6 à 8, dans lequel lesdits moyens de contrôle de mode (71) comportent des moyens pour réaliser une sélection d'un mode de codage tenant également compte d'au moins une des informations appartenant au groupe comprenant :

  - un niveau de qualité requis, pour la communication en cours ;
  - un niveau de qualité requis, pour au moins un sens de transmission et pour la communication en cours ;
  - un type de service transporté par ladite communication ;
  - la charge de trafic.

**10.** Système selon l'une des revendications 6 à 9, dans lequel lesdits moyens de contrôle de mode (71) comportent des moyens pour réaliser une sélection d'un mode de codage de façon à limiter la quantité de ressource allouée dans chaque sens de transmission et/ou à optimiser la qualité.

**11.** Equipement de réseau pour système radio mobile incluant au moins une station mobile et un réseau aptes à échanger des signaux numériques bidirectionnels entre au moins une station mobile et le réseau,
ledit système prévoyant au moins deux modes de codage($93_M$, $93_D$), chaque mode correspondant à un codage source prédéterminé ($921_M$, $921_D$) et à un codage canal prédéterminé ($922_M$, $922_D$) pour la transmission d'un signal utile, pour chaque sens de transmission,

ledit équipement de réseau incluant des moyens de contrôle de mode (71) qui sélectionnent pour chaque sens de transmission un desdits modes de codage, en fonction d'une information représentative de la qualité de transmission mesurée dans le sens correspondant,

dans lequel les moyens de contrôle de mode (71) comportent, pour sélectionner un desdits modes de codage pour le sens montant ($93_M$), des moyens pour comparer la qualité de transmission mesurée dans le sens montant ($91_M$) avec au moins un seuil prédéterminé (Si) qui est une valeur prédéterminée du rapport signal à interférence (C/I), et dans lequel les moyens de contrôle de mode (71) comportent, pour comparer la qualité de transmission mesurée avec au moins un seuil prédéterminé, des moyens pour mettre en oeuvre deux jeux d'au moins un seuil, un premier jeu étant mis en oeuvre lorsque la qualité de transmission mesurée baisse, et un second jeu étant mis en oeuvre lorsque la qualité de transmission mesurée augmente.

12. Equipement de réseau selon la revendication 11 , dans lequel lesdits moyens de contrôle de mode comportent, pour sélectionner un desdits modes de codage, des moyens pour sélectionner un codage source et des moyens pour sélectionner un codage canal

13. Equipement de réseau selon l'une des revendications 11 ou 12, dans lequel lesdits moyens pour mesurer la qualité de transmission comportent des moyens pour déterminer au moins une des informations appartenant au groupe comprenant :

   - le taux d'erreur bit (BER) du signal reçu ;
   - la puissance du signal reçu ;
   - la distance séparant le mobile et la station de base ;
   - une estimation de la réponse impulsionnelle du canal de transmission ;
   - l'alignement temporel ;
   - le rapport signal à bruit ;
   - le rapport signal à interférence (C/I) ;
   - la charge de trafic.

14. Equipement de réseau selon l'une des revendications 11 à 13, dans lequel lesdits moyens de contrôle de mode (71) comportent des moyens pour réaliser une sélection d'un mode de codage tenant également compte d'au moins une des informations appartenant au groupe comprenant :

   - un niveau de qualité requis, pour la communication en cours ;
   - un niveau de qualité requis, pour au moins un sens de transmission et pour la communication en cours ;
   - un type de service transporté par ladite communication ;
   - la charge de trafic.

15. Equipement de réseau selon l'une des revendications 11 à 14, **caractérisé en ce que** lesdits moyens de contrôle de mode (71) comportent des moyens pour réaliser une sélection d'un mode de codage de façon à limiter la quantité de ressource allouée dans chaque sens de transmission et/ou à optimiser la qualité.

**Claims**

1. Method of exchanging bidirectional digital signals between at least one mobile station and a network in a mobile radio system which provides at least two encoding modes, each mode corresponding to a predetermined source code associated with a predetermined channel code for the transmission of a wanted signal, for each transmission direction,

   wherein, at the time of a call between a mobile station and a base transceiver station, two separate analyses of transmission quality ($91_M$, $91_D$) are carried out for each transmission direction, respectively, and for each transmission direction one of said encoding modes ($93_M$, $93_D$) is selected ($92_M$, $92_D$) in accordance with the corresponding transmission quality analysis,

   wherein the selection of a coding mode includes a step of comparing information (Ic) representative of the measured transmission quality with at least one predetermined threshold (Si) that is a predetermined value of the signal to interference ratio (C/I),

   and wherein two sets of at least one threshold are defined, a first set being used if the measured transmission quality falls and a second set being used if the measured transmission quality rises.

2. Method according to claim 1, wherein the selection of an encoding mode includes the selection of a source code and the selection of a channel code.

3. Method according to claim 1 or 2, wherein the transmission quality analysis consists of determining at least one item of information belonging to the group including:

   - the bit error rate (BER) of the received signal,
   - the power of the received signal,
   - the distance between the mobile station and the base transceiver station,
   - an estimate of the impulse response of the transmission channel,
   - the time alignment,
   - the signal to noise ratio,

- the carrier to interference ratio (C/I), and
- the traffic lood.

4. Method according to any of claims 1 to 3, wherein said encoding mode selection also allows for at least one item of information belonging to the group including:

- a required quality level for the call in progress,
- a required quality level for at least one transmission direction and for the call in progress,
- a type of service carried by said call, and
- the traffic lood.

5. Method according to any of claims 1 to 4, **characterised in that** said selection of an encoding mode is performed in such a fashion as to limit the quantity of resource allocated in each transmision direction and/or to optimise the quality,

6. Mobile radio system including at least one mobile station and a network adapted to exchange bidirectional digital signals between at least one mobile station and the network, said system providing at least two encoding modes ($93_M$, $93_D$), for each transmission direction, each encoding mode corresponding to a predetermined source code ($921_M$, $921_D$) associated with a predetermined channel code ($922_M$, $922_D$) for the transmission of a wanted signal, the mobile station comprising means for measuring the transmission quality in the downlink direction ($91_D$) during a call between a mobile station and the network, and for transmitting to the network information representing the measured transmission Quality in the downlink direction, the network comprising means for measuring the transmission quality in the uplink direction ($91_M$) during a call between a mobile station and the network, and the network comprising mode control means (71) which select, in accordance with an item of information representative of the measured transmission quality in the corresponding direction, one of said encoding modes for each transmission direction, the network including, for selecting (92M) one of said encoding modes for the uplink direction, means for comparing the measured transmission quality in the uplink direction (91M) with at least one predetermined threshold (Si) that is a predetermined value of the signal to interference ratio (C/I), and wherein the network includes, for comparing the measured transmission quality in the uplink direction (91M) with at least one predetermined threshold means for implementing two sets of at least one threshold, a first set being used if the measured transmission quality falls and a second set being used if the measured transmission quality rises.

7. Mobile radio system according to claim 6, wherein said mode control means include, for selecting one of said encoding modes, means for selecting a source code and means for selecting a channel code

8. Mobile radio system according to claim 6 or 7, wherein said means for measuring the transmission quality include means for determining at least one item of information belonging to the group including:

- the bit error rate (BER) of the received signal,
- the power of the received signal,
- the distance between the mobile station and the base transceiver station,
- an estimate of the impulse response of the transmission channel,
- the time alignment,
- the signal to noise ratio,
- the carrier to interference ratio (C/I), and
- the traffic load.

9. System according any of claims 6 to 8, wherein said mode control means (71) include means for selecting an encoding mode allowing also for at least one item of information belonging to the group including:

- a required quality level for the call in progress,
- a required quality level for at least one transmission direction and for the call in progress,
- a type of service carried by said call, and
- the traffic load.

10. System according to any of claims 6 to 9, wherein said mode control means (71) include means for selecting an encoding mode in such a fashion as to limit the quantity of resource allocated in each transmission direction and/or to optimise the quality.

11. Network equipment for a mobile radio system including at least one mobile station and a network adapted to exchange bidirectional digital signals between at least one mobile station and the network, said system providing at least two encoding modes, each mode corresponding to a predetermined source code ($921_M$, $921_D$) associated with a predetermined channel code ($922_M$, $922_D$) for the transmission of a wanted signal, for each transmission direction, said network equipment including mode control means (71) that select one of said encoding modes for each transmission direction as a function of an item of information representative of the measured transmission quality in the corresponding direction, wherein the mode control means (71) include, for selecting one of said encoding modes for the uplink direction (93M), means for comparing the measured transmission quality in the uplink direction (91M) with at least one predetermined threshold (Si) that is a predetermined value of the signal to interference ratio (C/I), and wherein the mode control means (71) include, for comparing the measured transmission quality with at least one predetermined threshold, means for implementing two sets of at least one threshold, a first set being used if the measured transmission quality falls and a second set being used if the measured transmission quality rises

12. Network equipment according to claim 11, wherein said mode control means include, for selecting one of said encoding modes, means for selecting a source code and means for selecting a channel code.

13. Network equipment according to either of claims 11 and 12, wherein said means for measuring the transmission quality include means for determining at least one item of information belonging to the group including:

   - the bit error rate (BER) of the received signal,
   - the power of the received signal,
   - the distance between the mobile station and the base transceiver station,
   - an estimate of the impulse response of the transmission channel,
   - the time alignment,
   - the signal to noise ratio,
   - the carrier to interference ratio (C/I), and
   - the traffic load.

14. Network equipment according to any of claims 11 to 13, wherein said mode control meons (71) include means for selecting an encoding mode also taking into account at least one item of information belonging to the group including:

   - a required quality level for the call in progress,
   - a required quality level for at feast one transmission direction and for the call in progress,
   - o type of service carried by said call, and
   - the traffic lood.

15. Network equipment according to any of claims 11 to 14, **characterised in that** said mode control means (71) include means for selecting an encoding mode in such a fashion as to limit the quantity of resource allocated in each transmission direction and/or to optimise the quality.

**Patentansprüche**

1. Verfahren zum Austausch von digitalen, bidirektionalen Daten zwischen mindestens einer Mobilstation und einem Netzwerk in einem Mobilfunksystem, in dem mindestens zwei Codierungsmodi vorgesehen sind, wobei jeder Modus einer vordefinierten Quellcodierung und einer vordefinierten Kanalcodierung für die Übertragung eines Nutzsignals für jede Übertragungsrichtung entspricht,
in dem bei einer Kommunikation zwischen einer Mobilstation und einer Basisstation zwei verschiedene Analysen der Übertragungsqualität ($91_M$, $91_D$) für jede Übertragungsrichtung durchgeführt werden, und für jede der genannten Übertragungsrichtungen einer der genannten Codierungsmodi ($93_M$, $93_D$) in Abhängigkeit von der entsprechenden Analyse der Übertragungsqualität gewählt wird ($92_M$, $92_D$),
in dem die Auswahl eines Codierungsmodus einen Schritt zum Vergleich einer für die gemessene Übertragungsqualität repräsentativen Information ($I_Q$) mit mindestens einem vordefinierten Grenzwert (Si) beinhaltet, bei dem es sich um einen vordefinierten Wert für das Signal/Interferenz-Verhältnis (C/I) handelt, und bei dem zwei Gruppen mit mindestens einem Grenzwert definiert werden, wobei eine erste Gruppe eingesetzt wird, wenn die gemessene Übertragungsqualität abnimmt, und eine zweite Gruppe eingesetzt wird, ween die gemessene Übertragungsqualität zunimmt.

2. Verfahren gemäß Anspruch 1, in dem die Auswahl eines Codierungsmodus die Auswahl einer Quellcodierung und die Auswahl einer Kanalcodierung beinhaltet.

3. Verfahren gemäß einem der Ansprüche 1 oder 2, in dem die Analyse der Übertragungsqualität darin besteht, mindestens eine der Informationen aus einer Gruppe zu ermitteln, die Folgendes umfasst:

   - die Bitfehlerrate (BER) des empfangenen Signals,
   - die Leistung des empfangenen Signals,
   - die Entfernung zwischen Mobiltelefon und Basisstation,
   - eine Schätzung der Stoßantwort des Übertragungskals,
   - das Signal/Rausch-Verhältnis,
   - das Signal/Interferenz-Verhältnis (C/I),
   - das Verkehrsvolumen.

4. Verfahren gemäß einem der Ansprüche 1 bis 3, in dem bei der genannten Auswahl eines Codierungsmodus auch mindestens eine der Informationen aus einer Gruppe berücksichtigt wird, die Folgendes umfasst;

   - das erforderliche Qualitätsniveau für die aktuelle Kommunikation,
   - das erforderliche Qualitätsniveau für mindestens eine Übertragungsrichtung und für die aktuelle Kommunikation,
   - den in der genannten Kommunikation übertragenen Diensttyp,
- das Verkehrsvolumen.

5. Verfahren gemäß einem der Ansprüche 1 bis 4, **dadurch gekennzeichnet, dass** die genannte Auswahl eines Codierungsmodus dergestalt durchgeführt wird, dass die Menge der in jeder Übertragungsrichtung zugeordneten Ressourcen begrenzt und/oder die Qualität optimiert wird.

6. Mobilfunksystem, das mindestens eine Mobilstation und ein Netzwerk umfasst, die in der Lage sind, digitale, bidirektionale Signale zwischen mindestens einer Mobilstation und dem Netzwerk auszutauschen,
wobei das genannte System mindestens zwei Codierungsmodi ($93_M$, $93_D$) vorsieht, wobei jeder Modus einer vordefinierten Quellcodierung ($921_M$, $921_D$) und einer vordefinierten Kanalcodierung ($922_M$, $922_D$) für die Übertragung eines Nutzsignals für jede Übertragungsrichtung entspricht,
wobei die Mobilstation Mittel zur Messung der Übertragungsqualität in absteigender Richtung ($91_D$) bei einer Kommunikation zwischen Mobilstation und Netzwerk und zur Übertragung einer Information an das Netzwerk umfasst, die für die gemessene Übertragungsqualität in absteigender Richtung repräsentativ ist,
wobei das Netzwerk Mittel zur Messung der Übertragungsqualität in aufsteigender Richtung ($91_M$) bei einer Kommunikation zwischen einer Mobilstation und dem Netzwerk umfasst, und
wobei das Netzwerk Mittel (71) zur Steuerung des Modus umfasst, die für jede Übertragungsrichtung einen der genannten Codierungsmodi in Abhängigkeit von einer für die gemessene Übertragungsqualität in der entsprechenden Richtung repräsentative Information auswählen,
wobei das Netzwerk zur Auswahl ($92_M$) eines der genannten Codierungsmodi für die aufsteigende Richtung Mittel zum Vergleich der gemessenen Übertragungsqualität in aufsteigender Richtung ($91_M$) mit mindestens einem vordefinierten Grenzwert (Si) umfasst, bei dem es sich um einen vordefinierten Wert für das Signal/Interferenz-Verhältnis (C/I) handelt,
und wobei das Netzwerk zum Vergleich der gemessenen Übertragungsqualität in aufsteigender Richtung ($91_M$) mit mindestens einem vordefinierten Grenzwert Mittel zur Umsetzung von zwei Gruppen mit mindestens einem Grenzwert umfasst, wobei die erste Gruppe eingesetzt wird, wenn die gemessene Übertragungsqualität abnimmt, und die zweite Gruppe eingesetzt wird, wenn die gemessene Übertragungsqualität zunimmt.

7. Mobilfunksystem gemäß Anspruch 6, in dem die genannten Mittel zur Steuerung des Modus zur Auswahl eines der genannten Codierungsmodi Mittel zur Auswahl einer Quellcodierung und Mittel zur Auswahl einer Kanalcodierung umfassen.

8. Mobilfunksystem gemäß einem der Ansprüche 6 oder 7, in dem die genannten Mittel zur Messung der Übertragungsqual Mittel zur Ermittlung mindestens einer der Informationen umfassen, die zu einer Gruppe gehören, die Folgendes umfasst:

- die Bitfehlerrate (BER) des empfangenen Signals,
- die Leistung des empfangenen Signals,
- die Entfernung zwischen Mobiltelefon und Basisstation,
- eine Schätzung der Stoßantwort des Übertragungskanals,
- die zeitliche Ausrichtung,
- das Signal/Rausch-Verhältnis,
- das Signal/Interferenz-Verhältnis,
- das Verkehrsvolumen.

9. System gemäß einem der Ansprüche 6 bis 8, in dem die genannten Mittel zur Steuerung des Modus (71) Mittel zur Durchführung der Auswahl eines Codierungsmodus umfassen, die auch mindestens eine der Informationen berücksichtigen, die zu einer Gruppe gehören, die Folgendes umfasst:

- das erforderliche Qualitätsniveau für die aktuelle Kommunikation,
- das erforderliche Oualiträtsniveau für mindestens eine Übertragungsrichtung und für die aktuelle Kommunikation,
- den in der genannten Kommunikation übertragenen Diensttyp,
- das Verkehrsvolumen.

10. System gemäß einem der Ansprüche 6 bis 9, in dem die genannten Mittel zur Steuerung des Modus (71) Mittel zur Durchführung der Auswahl eines Codierungsmodus umfassen, um die Anzahl der in jeder Übertragungsrichtung zugeordneten Ressourcen zu begrenzen und/oder die Qualität zu optimieren.

11. Netzwerkeinrichtung für ein Mobilfunksystem, das mindestens eine Mobilstation und ein Netzwerk umfasst, die in der Lage sind, digitale, bidirektionale Daten zwischen mindestens einer Mobilstation und dem Netzwerk auszutauschen,
wobei das genannte System mindestens zwei Codierungsmodi ($93_M$, $93_D$) vorsieht, wobei jeder Modus einer vordefinierten Quellcodierung ($921_M$, $921_D$) und einer vordefinierten Kanalcodierung ($922_M$, $922_D$) für die Übertragung eines Nutzsignals für jede Übertragungsrichtung entspricht,
wobei die genannte Netzwerkeinrichtung Mittel zur Steuerung des Modus (71) umfasst, die für jede Übertragungsrichtung in Abhängigkeit von einer für die in der entsprechenden Richtung gemessene Übertragungsqualität repräsentativen Information einen der genannten Codierungsmodi auswählen, in der die genannten Mittel zur Steuerung des Modus (71) zur Auswahl eines der genannten Codierungsmodi für die aufsteigende Richtung ($93_M$) Mittel zum Vergleich der in aufsteigender Richtung ($91_M$) gemessenen Übertragungsqualität mit mindestens einem vordefinierten Grenzwert (Si) umfassen, bei dem es sich um einen vordefinierten Wert für das Signal/Interferenz-Verhältnis (C/I) handelt, und in dem die Mittel zur Steuerung des Modus (71) zum Vergleich der gemessenem Übertragungsqualität mit mindestens einem vordefinierten Grenzwert Mittel umfassen, um zwei Gruppen mit mindestens einem Grenzwert umzusetzen, wobei die erste Gruppe eingesetzt wird, wenn die gempssene Übertragungsqualität abnimmt, und wobei die zweite Gruppe eingesetzt wird, wenn die gemessene Übertragungsqualität zunimmt.

12. Netzwerkeinrichtung gemäß Anspruch 11, in der die genannten Mittel zu Steuerung des Modus zur Auswahl eines der genannten Codierungsmodi Mittel zur Auswahl einer Quellcodierung und Mittel zur Auswahl einer Kanalcodierung umfassen.

13. Netzwerkeinrichtung gemäß einem der Ansprüche 11 oder 12, in der die genannten Mittel zur Messung der Übertragungsqualität Mittel zur Ermittlung mindestens einer der Informationen umfassen, die zu einer Gruppe gehören, die Folgendes umfasst:

   - die Bitfehlerrate (BER) des empfangenen Signals,
   - die Leistung des empfangenen Signals,
   - die Entfernung zwischen Mobiltelefon und Basisstation, eine Schätzung der Stoßantwort des Übertragungskanals,
   - die zeitliche Ausrichtung,
   - das Signal/Rausch-Verhältnis,
   - das Signal/Interferenz-Verhältnis (C/I),
   - das Verkehrsvolumen.

14. Netzwekeinrichtung gemäß einem der Ansprüche 11 bis 13, in der die genannten Mittel zur Steuerung des Modus (71) Mittel zur Durchführung der Auswahl eines Codierungsmodus umfassen, die auch mindestens eine der Informationen berücksichtigen, die zu einer Gruppe gehören, die Folgendes umfasst:

   - das erforderliche Qualitätsniveau für die aktuelle Kommunikation,
   - das erforderliche Qualitätsniveau für mindestens eine Übertragungsrichtung und für die aktuelle Kommunikation,
   - den in der genannten Kommunikation übertragenen Diensttyp,
   - das Verkehrsvolumen.

15. Netzwerkeinrichtung gemäß einem der Ansprüche 11 bis 14, **dadurch gekennzeichnet, dass** die genannten Mittel zur Steuerung des Modus (71) Mittel zur Durchführung der Auswahl des Codierungsmodus umfassen, um die Anzahl an zugeordneten Ressourcen in jeder Übertragungsrichtung zu begrenzen und/oder die Qualität zu optimieren.

Fig. 1

Fig. 12

Réception —21

Calcul qualité —22

Transmission info qualité
vers station de base —29

26

HR                                    FR —24

23
Mode en
cours ?

27                                    25
N                                                    N
S[2]<IQ<S[1]                                IQ>S[1]

O                    28                    O
211                                                210
Changement          Modification ressource          Changement
HR → FR          et émission commande          FR → HR
                 changement de mode

Fig. 2

| Sens descendant \ Sens montant | 1 | 2 | 3 | n |
|---|---|---|---|---|
| 1 | 1 | n+1 | 2n | $\frac{n(n-1)}{2}+n$ |
| 2 | $\frac{n(n-1)}{2}+n+1$ | 2 | n+2 | 3n-2 |
| 3 | | $\frac{n(n-1)}{2}+n+2$ | 3 | 2n-1 |
| n | $n^2$ | | | n |

Fig. 14

Fig. 3A

Fig. 3B

Fig. 3C

Fig. 4A

Fig. 4B

## Fig. 5A

C/I sens 1

52 | 54

S[1] ---

51 | 53

S[2] =9dB ---

S[2]=9dB    S[1]    C/I sens 2

## Fig. 5B

C/I sens 1

56 | 58

S[1] =9dB ---

55 | 57

S[2] ---

S[2]    S[1]=9dB    C/I sens 2

## Fig. 6

BER

Q1 ---

61

Q2 ---

62

9dB    C/I

S[2]    S[1]

seuils du service "full rate" → S[2] S[1]
seuils du service "half rate" → S[2] S[1]

## Fig. 7

711 → 712 Codage source → 72 → 7131 Codage canal 1 → 718 → 717 Mise en forme des trames et émission →

713N

723

Codage canal N

77

Analyse du signal reçu    76    73  71    716

720  719

721

Transmission autres signaux

715

722

Extraction info qualité

78    710    75  79    Mode requis    Synchro trame    74

Mesure effectuée dans le sens descendant (C/I_dl) — 81

Mesure effectuée dans le sens montant (C/I_up) — 82

83 — Transmission des mesures à la station de base

84 — Configuration bidirectionnelle en cours?

1    2    3    4

85 — C/I_dl<S[1] et C/I_up<S[1] — non

86 — Config. 3 choisie

oui

811 — C/I_dl>S[1] et C/I_up<S[1] — non

87 — Requête de ressource

812 — Config. 4 choisie

oui

816 — C/I_dl<S[1] et C/I_up>S[1] — non

88 — Ressource allouée ?

813 — Requête de ressource

817 — Config. 2 choisie

821 — C/I_dl>S[1] et C/I_up>S[1]

oui

89 — Commande vers le mobile

814 — Ressource allouée ?

oui

818 — Requête de ressource

822 — Aucune modification (Config. 1)

815 — Commande vers le mobile

819 — Ressource allouée ?

oui

820 — Commande vers le mobile

810 — Aucune modification

Fig. 8

Fig. 9

Création de la
communication
(qualité requise i) — 101

Détermination
d'une information
de qualité IQ — 102

Seuillage et sélection
du mode de codage k
tel que C/I[k]≤IQ≤C/I[k-1] — 103

104

k ≠ mode utilisé ? — non — 105

oui

Changement de
mode de codage — 106

Transmission info
changement de mode
au mobile — 107

Fig. 10

Fig. 11

Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0472511 A

- EP 0423485 A

**Littérature non-brevet citée dans la description**

- **M Mouly ; M B Pautet.** *The GSM System for Mobile Communications*